# EUROPEAN PATENT APPLICATION

(11) **EP 4 790 865 A2**
(43) Date of publication of application: **12.08.2026**
(21) Application number: 26156609.5
(22) Date of filing: 05.02.2026
(51) Int. Cl.: H02J 3/32, H02J 3/388, H02J 9/06, H02J 9/08

(54) **PHOTOVOLTAIC POWER GENERATION SYSTEM AND CONTROL METHOD THEREFOR**

(30) Priority: 08.02.2025 CN 202510142096
(71) Applicant: Huawei Technologies Co., Ltd., Shenzhen, Guangdong 518129 (CN)
(72) Inventor: ZHANG, Peng, Shenzhen, Guangdong, 518129 (CN); WANG, Gang, Shenzhen, Guangdong, 518129 (CN); TANG, Qidi, Shenzhen, Guangdong, 518129 (CN); SU, Bing, Shenzhen, Guangdong, 518129 (CN); YANG, Boping, Shenzhen, Guangdong, 518129 (CN)
(74) Representative: Maiwald GmbH

(57) **Abstract**

This application provides a photovoltaic power generation system and a control method therefor, to control a switch circuit in an on/off-grid mode to be connected between an inverter and an automatic transfer switch ATS. The ATS is configured to switch between connecting a grid side of the switch circuit to a power grid and connecting the grid side of the switch circuit to a diesel generator. When the photovoltaic power generation system operates in an on-power grid mode, if the power grid is abnormal, the photovoltaic power generation system switches to an off-grid mode, that is, a photovoltaic module or an energy storage apparatus is used to supply power to a load. When the photovoltaic module or the energy storage apparatus supplies power to the load, that is, when the photovoltaic power generation system operates in the off-grid mode, if the photovoltaic module or the energy storage apparatus fails to supply sufficient power due to some factors, the photovoltaic power generation system switches to a diesel generator parallel mode. The foregoing switching process can implement continuous and stable power supply to the load during switching between different power supplies in the photovoltaic power generation system.

## Description

### TECHNICAL FIELD

The present invention relates to the field of power electronics technologies, and in particular, to a photovoltaic power generation system and a control method therefor.

### BACKGROUND

A whole-house backup power supply system mainly includes an inverter and an on/off-grid controller, and a plurality of manners such as a photovoltaic module, an energy storage apparatus, and a power grid may be used as power supplies, to implement stable power supply for a household load. With development of the photovoltaic and energy storage power generation industries, a household green electric energy solution gradually tends to be comprehensive. Configuring a diesel generator in the whole-house backup power supply system (the backup power supply system is a photovoltaic power generation system) can further improve power supply continuity and reliability of a load. For a backup power supply system including a photovoltaic module, an energy storage apparatus, and a diesel generator, how to ensure continuous and stable power supply to a load during switching between different power supply sources is a technical problem urgently needing to be resolved in this field.

### SUMMARY

This application provides a photovoltaic power generation system and a control method therefor, to implement continuous and stable power supply to a load during switching between different power supplies in the photovoltaic power generation system.

According to a first aspect, this application provides a photovoltaic power generation system, including an inverter, an on/off-grid controller, and an automatic transfer switch ATS. The on/off-grid controller includes a switch circuit and a control circuit. A direct current side of the inverter is configured to connect to a photovoltaic module or an energy storage apparatus, and an alternating current side of the inverter is connected to an inverter side of the switch circuit. The ATS is configured to switch between connecting a grid side of the switch circuit to a power grid and connecting the grid side of the switch circuit to a diesel generator. The control circuit is configured to: when the switch circuit is in a connected state and the ATS is in a state of connecting to the power grid, that is, when the photovoltaic power generation system operates in an on-power grid mode, if a voltage on the grid side is less than or equal to an undervoltage protection voltage value, that is, if the power grid is abnormal, disconnect the switch circuit, and control the inverter to switch to a voltage source mode, so that the on/off-grid controller switches to operating in an off-grid mode, that is, the photovoltaic module or the energy storage apparatus is used to supply power to a load; and when the photovoltaic module or the energy storage apparatus supplies power to the load, the photovoltaic power generation system operates in an off-grid mode, that is, when the switch circuit is in a disconnected state, if the photovoltaic module or the energy storage apparatus fails to supply sufficient power due to some factors, deliver a diesel generator start instruction, if the diesel generator start instruction is received, control a diesel generator to operate, and if the ATS is in a state of connecting to the diesel generator and the voltage on the grid side is greater than the undervoltage protection voltage value, connect the switch circuit, and control the inverter to switch to a current source mode, so that the on/off-grid controller switches to operating in a diesel generator parallel mode.

In this application, when the photovoltaic power generation system operates in the on-power grid mode, if the power grid is abnormal, the photovoltaic power generation system switches to operating in the off-grid mode, that is, the photovoltaic module or the energy storage apparatus is used to supply power to the load. When the photovoltaic module or the energy storage apparatus supplies power to the load, that is, when the photovoltaic power generation system operates in the off-grid mode, if the photovoltaic module or the energy storage apparatus fails to supply sufficient power due to some factors, the diesel generator start instruction is delivered, and the photovoltaic power generation system switches to operating in the diesel generator parallel mode. The foregoing switching process can implement continuous and stable power supply to the load during switching between different power supplies in the photovoltaic power generation system.

In some embodiments of this application, the control circuit is further configured to: when the photovoltaic power generation system operates in the diesel generator parallel mode, that is, when the switch circuit is in the connected state and the ATS is in the state of connecting to the diesel generator, if the diesel generator is faulty, or the photovoltaic module or the energy storage apparatus recovers to supply power to the load, deliver a diesel generator stop instruction, and if the diesel generator stop instruction is received, disconnect the switch circuit, control the inverter to switch to a voltage source mode, and control the diesel generator to shut down, so that the on/off-grid controller switches to operating in the off-grid mode, that is, the photovoltaic module or the energy storage apparatus is used to supply power to the load, to ensure stability of power supply to the load.

In some embodiments of this application, the control circuit is further configured to: when the photovoltaic power generation system operates in the diesel generator parallel mode, that is, when the switch circuit is in the connected state and the ATS is in the state of connecting to the diesel generator, if the power grid recovers, that is, if the voltage on the grid side is less than or equal to the undervoltage protection voltage value after the ATS detects that the voltage of the power grid is greater than a threshold and before the ATS switches to connecting the grid side of the switch circuit to the power grid, disconnect the switch circuit, and control the inverter to switch to the voltage source mode. That is, the photovoltaic power generation system first switches to operating in the off-grid mode. Then, when the photovoltaic power generation system operates in the off-grid mode, that is, when the switch circuit is in the disconnected state and the ATS is in the state of connecting to the power grid, if the voltage on the grid side is greater than the undervoltage protection voltage value, it indicates that the power grid recovers. In this case, the switch circuit is connected, and the inverter is controlled to switch to the current source mode, that is, the photovoltaic power generation system switches to operating in the on-power grid mode, to ensure stability of power supply to the load.

In some embodiments of this application, the on/off-grid controller includes an inverter-side port and a grid-side port. The inverter-side port is configured to connect to an alternating current side of the inverter, and the grid-side port is configured to connect to the ATS. The switch circuit includes a first relay and a second relay that are connected in series, the first relay is connected to the inverter-side port, and the second relay is connected to the grid-side port. When the photovoltaic power generation system switches from the off-grid mode to the on-power grid mode or the diesel generator parallel mode, that is, when it is detected that the voltage on the grid side is greater than the undervoltage protection voltage value, to ensure stability of power supply in the process of switching to the on-grid mode, a voltage on an inverter side needs to be synchronized with the voltage on the grid side first, and the switch circuit is connected after a synchronization condition is met. Specifically, when detecting that the voltage on the grid side is greater than the undervoltage protection voltage value, the control circuit sends a synchronization instruction to the inverter, and turns on the first relay. After receiving the synchronization instruction, the inverter switches to a VSG control mode. The inverter adjusts an amplitude and a frequency of an output voltage based on voltage information on the grid side, and may further adjust a phase. After the control circuit detects that differences between voltage amplitudes, phases, and frequencies on the grid side and the inverter side all meet conditions, it indicates that the voltage on the inverter side is synchronized with the voltage on the grid side. In this case, the control circuit turns on the second relay, to complete an operation of connecting the switch circuit.

In some other embodiments of this application, a system controller may be further included, and is mainly configured to implement functions such as system communication transmission, power scheduling, and information reporting. Generally, the system controller is connected to the inverter and the on/off-grid controller through one RS485 communication cable. The system control may be integrated inside the on/off-grid controller, or the system controller may be disposed outside the on/off-grid controller. The system controller is configured to: deliver, to the control circuit, the state in which the ATS is connected to the power grid or connected to the diesel generator, and deliver the diesel generator start instruction or the diesel generator stop instruction to the control circuit.

According to a second aspect, this application provides a control method for a photovoltaic power generation system. The method includes: when a switch circuit is in a connected state and an ATS connected to the switch circuit is in a state of connecting to a power grid, that is, when the photovoltaic power generation system operates in an on-power grid mode, if a voltage on a grid side of the switch circuit is less than or equal to an undervoltage protection voltage value, that is, the power grid is abnormal, disconnecting the switch circuit, and controlling an inverter to switch to a voltage source mode, so that the photovoltaic power generation system switches to operating in an off-grid mode, that is, a photovoltaic module or an energy storage apparatus is used to supply power to a load; and when the photovoltaic module or the energy storage apparatus supplies power to the load, the photovoltaic power generation system operates in the off-grid mode, that is, when the switch circuit is in a disconnected state, if the photovoltaic module or the energy storage apparatus fails to supply sufficient power due to some factors, delivering a diesel generator start instruction, if the diesel generator start instruction is received, controlling a diesel generator to operate, and if the ATS is in a state of connecting to the diesel generator and the voltage on the grid side is greater than the undervoltage protection voltage value, connecting the switch circuit, and controlling the inverter to switch to a current source mode, so that the photovoltaic power generation system switches to operating in a diesel generator parallel mode.

According to the foregoing control method provided in this application, when the photovoltaic power generation system operates in the on-power grid mode, if the power grid is abnormal, the photovoltaic power generation system switches to operating in the off-grid mode, that is, the photovoltaic module or the energy storage apparatus is used to supply power to the load. When the photovoltaic module or the energy storage apparatus supplies power to the load, that is, when the photovoltaic power generation system operates in the off-grid mode, if the photovoltaic module or the energy storage apparatus fails to supply sufficient power due to some factors, the diesel generator start instruction is delivered, and the photovoltaic power generation system switches to operating in the diesel generator parallel mode. The foregoing switching process can implement continuous and stable power supply to the load during switching between different power supplies in the photovoltaic power generation system.

In some embodiments of this application, the method further includes: when the photovoltaic power generation system operates in the diesel generator parallel mode, that is, when the switch circuit is in the connected state and the ATS is in the state of connecting to the diesel generator, if the diesel generator is faulty, or the photovoltaic module or the energy storage apparatus recovers to supply power to the load, delivering a diesel generator stop instruction, and if the diesel generator stop instruction is received, disconnecting the switch circuit, control the inverter to switch to a voltage source mode, and controlling the diesel generator to shut down, so that the photovoltaic power generation system switches to operating in the off-grid mode, that is, the photovoltaic module or the energy storage apparatus is used to supply power to the load, to ensure stability of power supply to the load.

In some embodiments of this application, the method further includes: when the photovoltaic power generation system operates in the diesel generator parallel mode, that is, when the switch circuit is in the connected state and the ATS is in the state of connecting to the diesel generator, if the power grid recovers, that is, if the voltage on the grid side is less than or equal to the undervoltage protection voltage value after the ATS detects that the voltage of the power grid is greater than a threshold and before the ATS switches to connecting the grid side of the switch circuit to the power grid, disconnect the switch circuit, and control the inverter to switch to the voltage source mode. That is, the photovoltaic power generation system first switches to operating in the off-grid mode. Then, when the photovoltaic power generation system operates in the off-grid mode, that is, when the switch circuit is in the disconnected state and the ATS is in the state of connecting to the power grid, if the voltage on the grid side is greater than the undervoltage protection voltage value, the switch circuit is connected, and the inverter is controlled to switch to the current source mode, that is, the photovoltaic power generation system switches to operating in the on-power grid mode, to ensure stability of power supply to the load.

In some embodiments of this application, when the photovoltaic power generation system switches from the off-grid mode to the on-power grid mode or the diesel generator parallel mode, that is, when it is detected that the voltage on the grid side is greater than the undervoltage protection voltage value, to ensure stability of power supply in the process of switching to the on-grid mode, a voltage on an inverter side needs to be synchronized with the voltage on the grid side first, and the switch circuit is connected after a synchronization condition is met. Specifically, when it is detected that the voltage on the grid side is greater than the undervoltage protection voltage value, a synchronization instruction is sent to the inverter, and a first relay connected to an alternating current side of the inverter is turned on. After receiving the synchronization instruction, the inverter switches to a VSG control mode. The inverter adjusts an amplitude and a frequency of an output voltage based on voltage information on the grid side, and may further adjust a phase. After a control circuit detects that differences between voltage amplitudes, phases, and frequencies on the grid side and the inverter side all meet conditions, it indicates that the voltage on the inverter side is synchronized with the voltage on the grid side. The control circuit turns on a second relay connected to the ATS, to complete an operation of connecting the switch circuit.

According to a third aspect, this application provides a photovoltaic power generation system, including an inverter and an ATS. The inverter includes an inverter circuit, a first switch circuit, a grid-side port, and a control circuit. A direct current side of the inverter circuit is configured to connect to a photovoltaic module or an energy storage apparatus, and the first switch circuit is connected between an alternating current side of the inverter circuit and the grid-side port. The ATS is configured to switch between connecting the grid-side port to a power grid and connecting the grid-side port to a diesel generator. The control circuit is configured to: when the first switch circuit is in a connected state and the ATS is in a state of connecting to the power grid, that is, when the photovoltaic power generation system operates in an on-power grid mode, if a voltage of the grid-side port is less than or equal to an undervoltage protection voltage value, that is, the power grid is abnormal, disconnect the first switch circuit, and control the inverter circuit to switch to a voltage source mode, so that the photovoltaic power generation system switches to operating in an off-grid mode, that is, a photovoltaic module or an energy storage apparatus is used to supply power to the load; and when the photovoltaic power generation system operates in the off-grid mode, that is, when the first switch circuit is in a disconnected state, if the photovoltaic module or the energy storage apparatus fails to supply sufficient power due to some factors, control the diesel generator to operate, and if the ATS is in a state of connecting to the diesel generator and the voltage of the grid-side port is greater than the undervoltage protection voltage value, connect the first switch circuit, and control the inverter circuit to switch to a current source mode, so that the photovoltaic power generation system switches to operating in a diesel generator parallel mode.

In this application, when the photovoltaic power generation system operates in the on-power grid mode, if the power grid is abnormal, the photovoltaic power generation system switches to operating in the off-grid mode, that is, the photovoltaic module or the energy storage apparatus is used to supply power to the load. When the photovoltaic module or the energy storage apparatus supplies power to the load, that is, when the photovoltaic power generation system operates in the off-grid mode, if the photovoltaic module or the energy storage apparatus fails to supply sufficient power due to some factors, the photovoltaic power generation system switches to the diesel generator parallel mode. The foregoing switching process can implement continuous and stable power supply to the load during switching between different power supplies in the photovoltaic power generation system.

In some embodiments of this application, the control circuit is further configured to: when the photovoltaic power generation system operates in the diesel generator parallel mode, that is, when the first switch circuit is in the connected state and the ATS is in the state of connecting to the diesel generator, if the diesel generator is faulty, or if the photovoltaic module or the energy storage apparatus recovers to supply power to the load, disconnect the first switch circuit, control the inverter circuit to switch to the voltage source mode, and control the diesel generator to shut down, so that the photovoltaic power generation system switches to operating in the off-grid mode, that is, the photovoltaic module or the energy storage apparatus is used to supply power to the load, to ensure stability of power supply to the load.

In some embodiments of this application, the control circuit is further configured to: when the photovoltaic power generation system operates in the diesel generator parallel mode, that is, when the first switch circuit is in the connected state and the ATS is in the state of connecting to the diesel generator, if the power grid recovers, that is, if the voltage of the grid-side port is less than or equal to the undervoltage protection voltage value after the ATS detects that the voltage of the power grid is greater than a threshold and before the ATS switches to connecting to the power grid at the grid-side port, disconnect the first switch circuit, and control the inverter circuit to switch to the voltage source mode. That is, the photovoltaic power generation system first switches to operating in the off-grid mode. Then, when the photovoltaic power generation system operates in the off-grid mode, that is, when the first switch circuit is in the disconnected state and the ATS is in the state of connecting to the power grid, if the voltage of the grid-side port is greater than the undervoltage protection voltage value, it indicates that the power grid recovers. In this case, the first switch circuit is connected, and the inverter circuit is controlled to switch to the current source mode, that is, the photovoltaic power generation system switches to operating in the on-power grid mode, to ensure stability of power supply to the load.

In some embodiments of this application, the photovoltaic power generation system further includes an off-grid port and a second switch circuit. The off-grid port is configured to connect to a backup load. When the photovoltaic power generation system operates, the controller controls the second switch circuit to be in a connected state. When the photovoltaic power generation system switches from the off-grid mode to the on-power grid mode or the diesel generator parallel mode, that is, when it is detected that the voltage of the grid-side port is greater than the undervoltage protection voltage value, to ensure stability of power supply in the process of switching to the on-grid mode, the voltage of the off-grid port needs to be synchronized with the voltage of the grid-side port first, and the first switch circuit is connected after a synchronization condition is met. Specifically, when detecting that the voltage of the grid-side port is greater than the undervoltage protection voltage value, the control circuit controls the inverter circuit to switch to a VSG control mode. The inverter circuit adjusts an amplitude and a frequency of an output voltage based on voltage information of the grid-side port, and may further adjust a phase. After the control circuit detects that differences between voltage amplitudes, phases, and frequencies of the grid-side port and the off-grid port all meet conditions, it indicates that the voltage of the off-grid port is synchronized with the voltage of the grid-side port. In this case, the first switch circuit is controlled to be connected, to complete an operation of connecting the first switch circuit.

### BRIEF DESCRIPTION OF DRAWINGS

FIG. 1 is a diagram of a networking architecture in the conventional technology;
FIG. 2 is a diagram of another networking architecture in the conventional technology;
FIG. 3 is a diagram of a structure of a photovoltaic power generation system according to an embodiment of this application;
FIG. 4a is a diagram of a circuit structure of a single-phase on/off-grid controller according to an embodiment of this application;
FIG. 4b is a diagram of a circuit structure of a three-phase on/off-grid controller according to an embodiment of this application;
FIG. 5 is a diagram of switching between different operation modes of a photovoltaic power generation system according to an embodiment of this application;
FIG. 6A to FIG. 6C are a schematic flowchart of switching between different operation modes of a photovoltaic power generation system according to an embodiment of this application;
FIG. 7 is a diagram of another structure of a photovoltaic power generation system according to an embodiment of this application;
FIG. 8 is a diagram of another structure of a photovoltaic power generation system according to an embodiment of this application; and
FIG. 9 is a diagram of another structure of a photovoltaic power generation system according to an embodiment of this application.

### DESCRIPTION OF EMBODIMENTS

To make the objectives, technical solutions, and advantages of this application clearer, the following further describes this application in detail with reference to the accompanying drawings. However, example embodiments may be implemented in a plurality of forms and should not be construed as being limited to embodiments described herein. On the contrary, these embodiments are provided such that this application is more comprehensive and complete and fully conveys the concept of the example embodiments to persons skilled in the art. Identical reference numerals in the accompanying drawings denote identical or similar structures. Therefore, repeated description thereof is omitted. Expressions of locations and directions in this application are described by using the accompanying drawings as an example. However, changes may also be made as required, and all the changes fall within the protection scope of this application. The accompanying drawings in this application are merely used to illustrate relative position relationships and do not represent an actual scale.

It should be noted that specific details are set forth in the following descriptions for ease of fully understanding this application. However, this application can be implemented in a plurality of manners different from those described herein, and a person skilled in the art can perform similar promotion without departing from the connotation of this application. Therefore, this application is not limited to the following disclosed specific implementations. The following descriptions of this specification are example manners of implementing this application. However, the descriptions are intended to describe the general principle of this application, and are not intended to limit the scope of this application. The protection scope of this application shall be defined by the appended claims.

To facilitate understanding of embodiments of this application, the following first describes related technologies in embodiments of this application.

Terms used in the following embodiments are merely intended to describe specific embodiments, but are not intended to limit this application. Terms "one", "a", and "this" of singular forms used in this specification and the appended claims of this application are also intended to include a form like "one or more", unless otherwise specified in the context clearly. It may be further understood that, in the following embodiments of this application, "at least one" means one, two, or more.

Reference to "an embodiment" or the like described in this specification means that one or more embodiments of this application include a particular feature, structure, or characteristic described in combination with the embodiment. Therefore, statements such as "in an embodiment", "in some implementations", and "in other implementations" that appear at different places in this specification do not necessarily mean referring to a same embodiment. Instead, the statements mean "one or more but not all of embodiments", unless otherwise specifically emphasized in another manner. The terms "include", "have", and variants of the terms all mean "include but are not limited to", unless otherwise specifically emphasized in another manner.

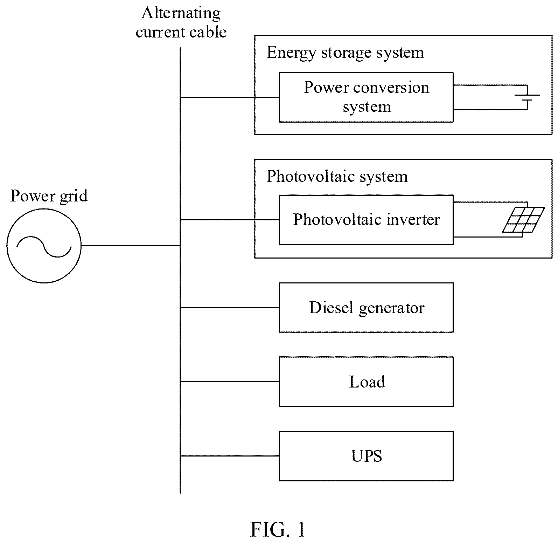

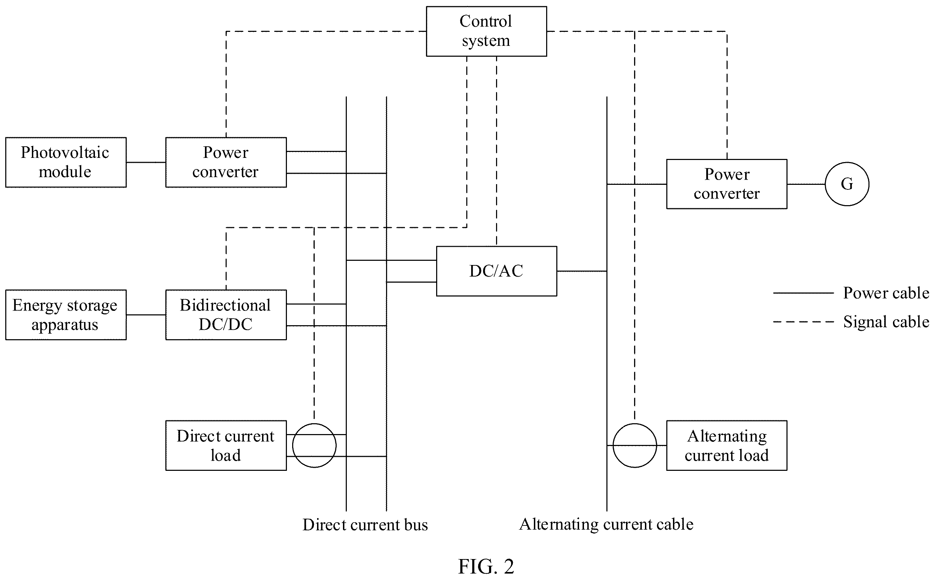

Refer to FIG. 1. Currently, in a photovoltaic power generation system in which a power supply includes a diesel generator, a power grid, a photovoltaic module, and an energy storage apparatus, both the power supply and a load are connected to a networking architecture of the photovoltaic power generation system through an alternating current cable. The photovoltaic power generation system implements switching of the power supply by detecting a voltage change of the power grid, a change of an amount of electricity stored in the energy storage apparatus, and a change of a power generation capability of the photovoltaic module, to supply power to the load. Because the diesel generator and the power grid are directly connected to the alternating current power cable, only when detecting a voltage change of the alternating current power cable, the photovoltaic power generation system can determine that the power grid is powered off and switch to the diesel generator for power supply. As a result, power supply to the load is interrupted during switching from supplying power by the power grid to supplying power by the diesel generator, and seamless switching cannot be implemented. Consequently, continuity of power supply to the load cannot be ensured. In addition, a large current impact may also exist during switching of the power supply, and stability of power supply to the load cannot be ensured. Refer to FIG. 2. In the conventional technology, a power converter may be further added between the diesel generator and the alternating current cable to control the diesel generator to connect to and disconnect from the photovoltaic power generation system. The added power converter increases costs and control complexity of the photovoltaic power generation system.

Based on this, embodiments of this application provide a photovoltaic power generation system and a control method therefor, to ensure stability of power supply to a load during switching between different power supplies in the photovoltaic power generation system.

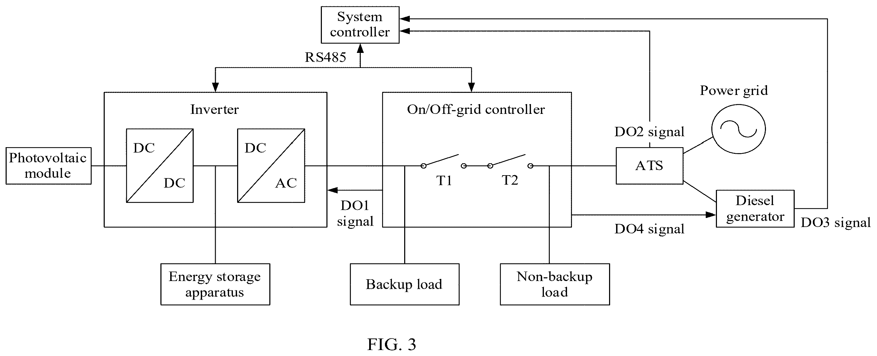

Refer to FIG. 3. The photovoltaic power generation system provided in this embodiment of this application includes an inverter, an on/off-grid controller, and an automatic transfer switch (automatic transfer switch, ATS). The backup power supply system may further include a system controller mainly configured to implement functions such as system communication transmission, power scheduling, and information reporting. Generally, the system controller is connected to the inverter and the on/off-grid controller through one RS485 communication cable. The inverter is connected between a direct current source and the on/off-grid controller. A direct current side of the inverter is configured to connect to the direct current source. The direct current source may be specifically a photovoltaic module, or the direct current source may be an energy storage apparatus. An alternating current side of the inverter is connected to an inverter side of the on/off-grid controller. The inverter is configured to convert a direct current provided by the photovoltaic module or the energy storage apparatus into an alternating current. The inverter may specifically include an inverter circuit DC/AC, and may further include a direct current conversion circuit DC/DC. The direct current conversion circuit DC/DC is configured to perform power conversion on the direct current provided by the photovoltaic module. The inverter circuit DC/AC is configured to convert a direct current provided by the direct current conversion circuit DC/DC or the direct current provided by the energy storage apparatus into an alternating current. The on/off-grid controller may specifically include a switch circuit. An inverter side of the switch circuit is connected to the alternating current side of the inverter, and a grid side of the switch circuit is connected to the ATS. The ATS is configured to switch between connecting a grid side of the switch circuit to a power grid and connecting the grid side of the switch circuit to a diesel generator. In this application, the on/off-grid controller is connected between the inverter and the ATS. The power grid or the diesel generator is connected to the ATS to provide alternating current electric energy for the photovoltaic power generation system. The photovoltaic module or the energy storage apparatus is connected to the inverter to provide direct current electric energy for the photovoltaic power generation system. Specifically, when detecting that a voltage of the power grid is normal, the ATS switches to a state of connecting to the power grid. When the voltage of the power grid is abnormal, for example, the voltage of the power grid is less than a threshold, if the ATS detects that a voltage output by the diesel generator is normal, for example, the voltage is greater than the threshold, the ATS automatically switches to the state of connecting to the diesel generator. The ATS connected to the grid side of the on/off-grid controller can implement switching between two on-grid power supplies: the power grid and the diesel generator, without complex control logic.

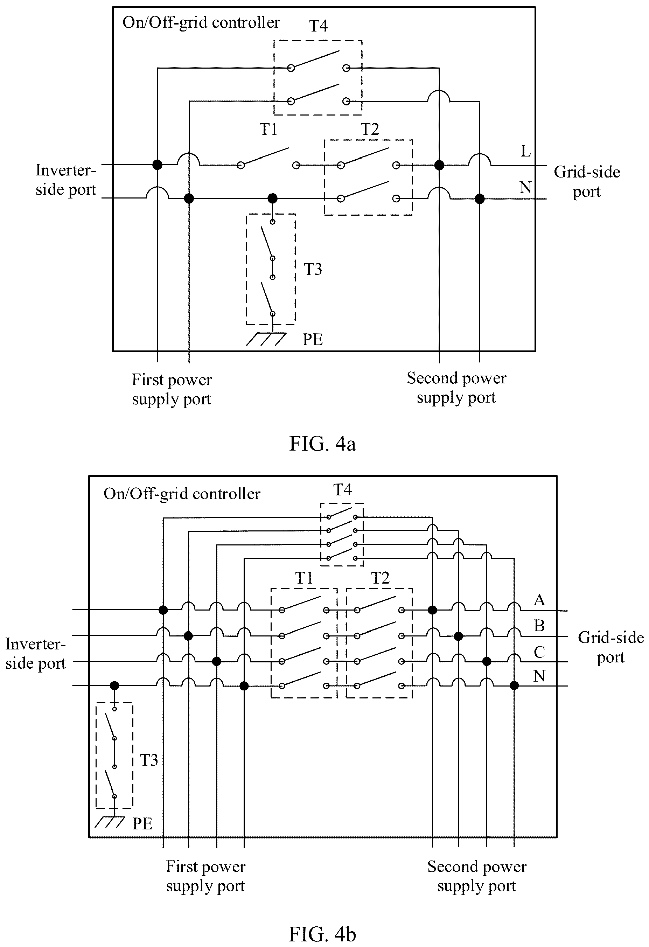

To meet a power consumption safety requirement, the switch circuit generally includes two levels of switches, namely, a first relay T1 and a second relay T2 that are connected in series. Refer to FIG. 4a and FIG. 4b. The on/off-grid controller generally includes four ports, which are specifically a first power supply port, a second power supply port, an inverter-side port, and a grid-side port. The first power supply port is configured to connect to a backup load, the second power supply port is configured to connect to a non-backup load, the inverter-side port is configured to connect to the alternating current side of the inverter, and the grid-side port is configured to connect to the ATS. The first relay T1 is connected to both the first power supply port and the inverter-side port, and the second relay T2 is connected to both the second power supply port and the grid-side port. As shown in FIG. 4a, the on/off-grid controller provided in this application may be a single-phase on/off-grid controller. Alternatively, as shown in FIG. 4b, the on/off-grid controller provided in this application may be a three-phase on/off-grid controller. In addition, the on/off-grid controller may further include an NPE relay T3 connected between a neutral wire N and a ground wire PE, and a bypass switch T4 connected between the inverter-side port and the grid-side port.

The on/off-grid controller further includes a control circuit. The control circuit may determine an operation mode of the photovoltaic power generation system based on a voltage on the grid side of the switch circuit, a voltage on the inverter side of the switch circuit, and a type of a connected alternating current power supply sent by the ATS (that is, the ATS is in the state of connecting to the power grid or the ATS is in a state of connecting to the diesel generator). Specifically, the operation mode of the photovoltaic power generation system is mainly classified into an on-power grid mode, a diesel generator parallel mode, and an off-grid mode. In addition, the control circuit may control the two levels of switches in the switch circuit to be connected or disconnected, to implement switching between the on-grid mode (including the on-power grid mode and the diesel generator parallel mode) and the off-grid mode of the photovoltaic power generation system, to ensure continuity of power supply to the load.

In this application, when the voltage on the grid side is greater than an undervoltage protection voltage value and the ATS is in the state of connecting to the power grid, the control circuit controls the switch circuit to be in a connected state, controls the inverter to operate in a current source mode, and controls the diesel generator to shut down, so that the photovoltaic power generation system operates in the on-power grid mode to supply power to the load. The undervoltage protection voltage value is usually set to a voltage value of a level-1 undervoltage protection point, for example, may be set to 0.7Un, where Un is a rated voltage value of the power grid. On-grid operation can be performed only when the voltage on the grid side is greater than the undervoltage protection voltage value. Once the voltage on the grid side is less than the undervoltage protection voltage value, on-grid operation cannot be performed, and only the off-grid mode can be switched to. When the voltage on the grid side is greater than the undervoltage protection voltage value and the ATS is in a state of connecting to the diesel generator, the control circuit controls the switch circuit to be in the connected state, controls the inverter to operate in the current source mode, and controls the diesel generator to operate, so that the photovoltaic power generation system operates in the diesel generator parallel mode to supply power to the load. When the voltage on the grid side is less than or equal to the undervoltage protection voltage value and the voltage on the inverter side is greater than a minimum off-grid output voltage value, the control circuit controls the switch circuit to be in a disconnected state, controls the inverter to operate in a voltage source mode, and controls the diesel generator to shut down, so that the photovoltaic power generation system operates in the off-grid mode to supply power to the load. The minimum off-grid output voltage value is a minimum voltage value output by the inverter operating in the off-grid mode, for example, 0.6Un may be selected. Off-grid operation can be performed only when the voltage on the inverter side is greater than the minimum off-grid output voltage value.

In this application, the control circuit may send an on/off-grid switching signal (a DO1 signal) to the inverter, to control the inverter to operate in the current source mode or the voltage source mode. Specifically, the on/off-grid switching signal may include a first high-level signal indicating on-grid operation and a first low-level signal indicating off-grid operation. The control circuit sends the first high-level signal or the first low-level signal to the inverter. When receiving the first low-level signal, the inverter switches to operating in the voltage source mode. When receiving the first high-level signal, the inverter switches to operating in the current source mode.

In this application, the ATS may send an ATS state switching signal (a DO2 signal) to the system controller. The system controller delivers the type of the alternating current power supply to the inverter and the on/off-grid controller through RS485 communication, so that the on/off-grid controller determines that the ATS is in the state of connecting to the power grid or the diesel generator. In this way, the on/off-grid controller determines an operation mode in which the photovoltaic power generation system operates. When receiving the first high-level signal indicating on-grid operation, the inverter may select, based on the received type of the alternating current power supply, an output voltage that meets a voltage protection parameter of the currently connected power grid or diesel generator. Specifically, the ATS state switching signal may include a second high-level signal indicating connecting to the diesel generator and a second low-level signal indicating connecting to the power grid. When detecting that the voltage of the power grid is greater than the threshold, the ATS determines that the ATS is in a state of connecting to the power grid, and sends the second low-level signal to the system controller. The system controller forwards the received signal to the control circuit, so that the control circuit determines that the ATS is in the state of connecting to the power grid. When detecting that the voltage of the diesel generator is greater than the threshold, the ATS determines that the ATS is in a state of connecting to the diesel generator, and sends the second high-level signal to the system controller. The system controller forwards the received signal to the control circuit, so that the control circuit determines that the ATS is in the state of connecting to the diesel generator.

In this application, the diesel generator may send a diesel generator fault signal (a DO3 signal) to the system controller, so that the system controller formulates a diesel generator start/stop strategy by comprehensively considering system data such as an energy storage capacity and a remaining state of charge (SOC), power of the photovoltaic module, an overload state of the inverter, a state of the diesel generator, and a state of the power grid. The system controller delivers a diesel generator start/stop instruction to the on/off-grid controller through RS485 communication, so that the on/off-grid controller determines the operation mode in which the photovoltaic power generation system operates, and controls the diesel generator to operate or shut down. Specifically, the diesel generator fault signal may include a third high-level signal indicating that the diesel generator is faulty and a third low-level signal indicating that the diesel generator is normal. When detecting that a fault occurs, the diesel generator sends the third high-level signal to the system controller, and the system controller sends the diesel generator stop instruction to the control circuit. When the diesel generator is normal, the diesel generator sends the third low-level signal to the system controller. If the system controller determines, based on the system data such as the energy storage capacity and the remaining state of charge (SOC), the power of the photovoltaic module, the overload state of the inverter, the state of the diesel generator, and the state of the power grid, that the diesel generator needs to be started, the system controller sends the diesel generator start instruction to the control circuit.

In this application, the control circuit may send a diesel generator start/stop control signal (a DO4 signal) to the diesel generator, to control the diesel generator to operate or shut down. Specifically, the diesel generator start/stop control signal may include a fourth high-level signal indicating to start the diesel generator and a fourth low-level signal indicating to shut down the diesel generator. The control circuit sends the fourth high-level signal or the fourth low-level signal to the diesel generator. When receiving the fourth high-level signal, the diesel generator performs a start operation. When receiving the fourth low-level signal, the diesel generator performs a shutdown operation.

In this application, the photovoltaic power generation system may quickly transmit the on/off-grid switching signal, the ATS state switching signal, the diesel generator fault signal, and the diesel generator start/stop control signal by disposing signal cables independent of a power cable. Transmitting the foregoing signals through the signal cables can improve signal transmission speed and reliability. Specifically, refer to FIG. 3. A signal cable for transmitting the on/off-grid switching signal may be disposed between the on/off-grid controller and the inverter. A signal cable for transmitting the ATS state switching signal may be disposed between the ATS and the system controller. A signal cable for transmitting the diesel generator fault signal may be disposed between the diesel generator and the system controller. A signal cable for transmitting the diesel generator start/stop control signal may be disposed between the on/off-grid controller and the diesel generator.

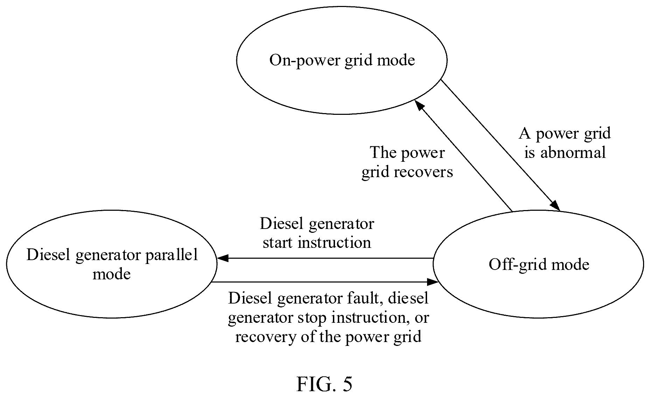

Refer to FIG. 5. In this application, an operation mode switching condition of the photovoltaic power generation system is as follows: When the power grid is normal, the photovoltaic power generation system operates in the on-power grid mode. When the photovoltaic power generation system operates in the on-power grid mode, if the power grid is abnormal, that is, the voltage of the power grid is less than the undervoltage protection voltage value, the photovoltaic power generation system switches to operating in the off-grid mode, that is, the photovoltaic module or the energy storage apparatus is used to supply power to the load. When the photovoltaic module or the energy storage apparatus supplies power to the load, that is, when the photovoltaic power generation system operates in the off-grid mode, if the photovoltaic module or the energy storage apparatus fails to supply sufficient power due to some factors, the diesel generator start instruction is delivered, and the photovoltaic power generation system switches to operating in the diesel generator parallel mode.

When the photovoltaic power generation system operates in the diesel generator parallel mode, if the diesel generator is faulty, or if the photovoltaic module or the energy storage apparatus recovers to supply power to the load, the diesel generator stop instruction is delivered, and the photovoltaic power generation system switches to operating in the off-grid mode, that is, the photovoltaic module or the energy storage apparatus is used to supply power to the load.

When the photovoltaic module or the energy storage apparatus supplies power to the load, that is, when the photovoltaic power generation system operates in the off-grid mode, if the power grid recovers, that is, the voltage of the power grid recovers to be greater than the undervoltage protection voltage value, the photovoltaic power generation system switches to operating in the on-power grid mode.

When the photovoltaic power generation system operates in the diesel generator parallel mode, if the power grid recovers, the photovoltaic power generation system first switches to operating in the off-grid mode, and then switches to operating in the on-power grid mode.

The foregoing switching logic can implement seamless switching between power supplies in the photovoltaic power generation system, to ensure continuous and stable power supply to the load.

The following describes in detail determining logic of operation modes and switching logic between operation modes in the photovoltaic power generation system.

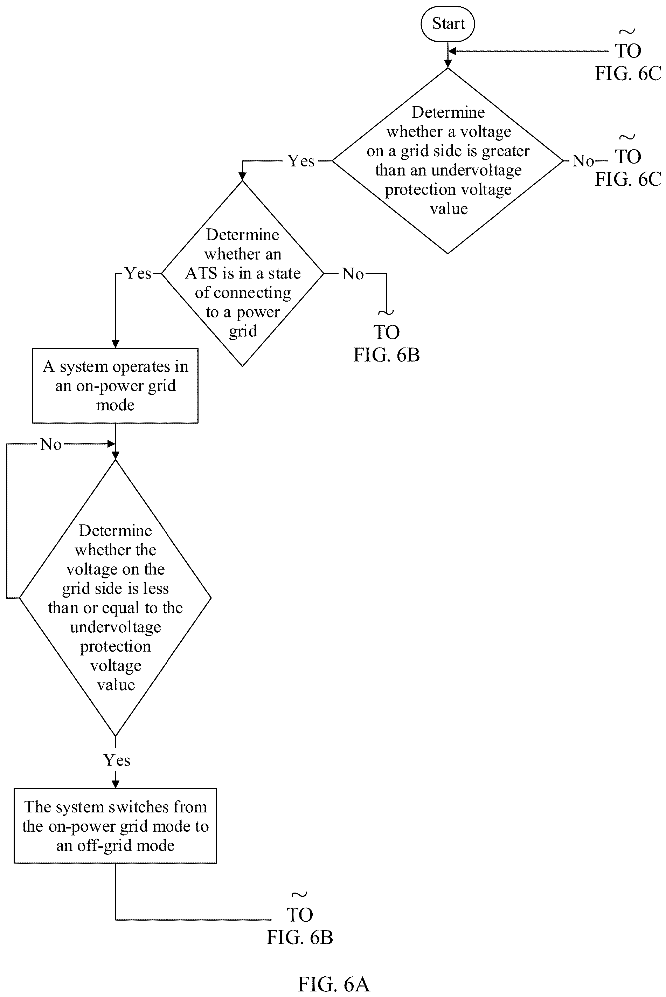

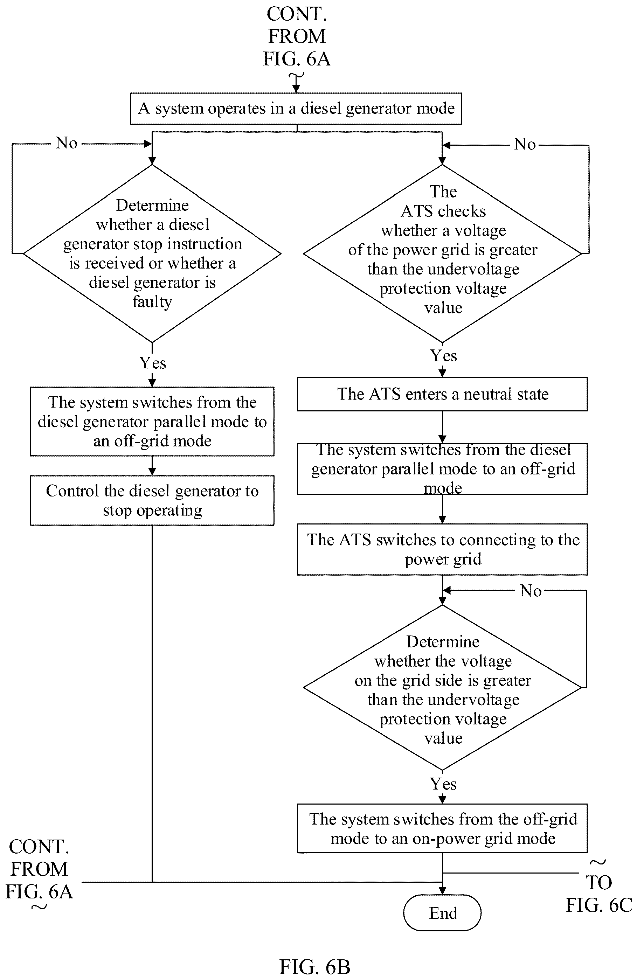

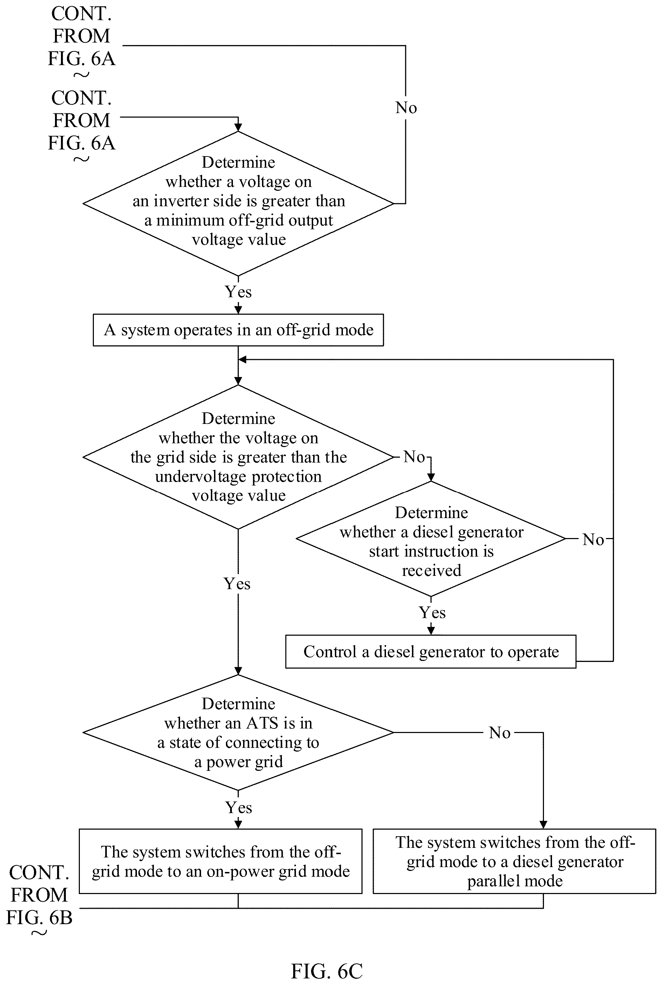

Refer to FIG. 6A to FIG. 6C. After the on/off-grid controller is powered on, the control circuit first determines whether the voltage on the grid side is greater than the undervoltage protection voltage value. If it is determined that the voltage on the grid side is greater than the undervoltage protection voltage value, the control circuit determines, based on the ATS state switching signal fed back by the ATS, whether the ATS is in the state of connecting to the power grid. If it is determined that the ATS is in the state of connecting to the power grid, the control circuit controls the switch circuit to be in the connected state, and the control circuit sends, to the inverter, the first high-level signal indicating on-grid operation, so that the inverter operates in the current source mode, and the photovoltaic power generation system operates in the on-power grid mode to supply power to the load. If it is determined that the ATS is in the state of connecting to the diesel generator, the control circuit controls the switch circuit to be in the connected state, and the control circuit sends, to the inverter, the first high-level signal indicating on-grid operation, so that the inverter operates in the current source mode, and the photovoltaic power generation system operates in the diesel generator parallel mode to supply power to the load. If it is determined that the voltage on the grid side is less than or equal to the undervoltage protection voltage value, the control circuit determines whether the voltage on the inverter side is greater than the minimum off-grid output voltage value. If it is determined that the voltage on the inverter side is greater than the minimum off-grid output voltage value, the control switch circuit is in the disconnected state, and the control circuit sends, to the inverter, the first low-level signal indicating off-grid operation, so that the inverter operates in the voltage source mode, and the photovoltaic power generation system operates in the off-grid mode to supply power to the load.

Refer to FIG. 6A to FIG. 6C. When the photovoltaic power generation system operates in the on-power grid mode, that is, when the switch circuit is in the connected state and the ATS is in the state of connecting to the power grid, if the control circuit detects that the voltage on the grid side is less than or equal to the undervoltage protection voltage value, it indicates that the power grid is faulty. In this case, the control circuit disconnects the switch circuit, and sends, to the inverter, the first low-level signal indicating off-grid operation. The inverter switches to the voltage source mode based on the first low-level signal, and the photovoltaic power generation system switches from operating in the on-power grid mode to the off-grid mode.

Refer to FIG. 6A to FIG. 6C. When the photovoltaic power generation system operates in the off-grid mode, that is, when the switch circuit is in the disconnected state, if the system controller receives the third low-level signal that is sent by the diesel generator and that indicates that the diesel generator is normal, and if the system controller determines, based on another condition (for example, insufficient power generation of the photovoltaic module or the energy storage apparatus), that the diesel generator needs to be started, the system controller delivers the diesel generator start instruction to the on/off-grid controller. When determining that the diesel generator start instruction is received, the control circuit sends, to the diesel generator, the fourth high-level signal indicating to start the diesel generator. The diesel generator performs the start operation when receiving the fourth high-level signal. After the diesel generator operates, when detecting that the voltage of the diesel generator is normal, the ATS switches to the state of connecting to the diesel generator, and sends, to the system controller, the second high-level signal indicating connecting to the diesel generator. The system controller delivers, to the on/off-grid controller through RS485 communication, a signal indicating that the type of the alternating current power supply is the diesel generator. After the diesel generator operates, when the control circuit detects that the voltage on the grid side is greater than the undervoltage protection voltage value, the control circuit connects the switch circuit, and sends, to the inverter, the first high-level signal indicating on-grid operation. The inverter switches to the current source mode based on the first high-level signal, and the photovoltaic power generation system switches from operating in the off-grid mode to the diesel generator parallel mode.

Refer to FIG. 6A to FIG. 6C. When the photovoltaic power generation system operates in the diesel generator parallel mode, that is, when the switch circuit is in the connected state and the ATS is in the state of connecting to the diesel generator, if the diesel generator is faulty and sends, to the system controller, the third high-level signal indicating that the diesel generator is faulty. After receiving the diesel generator fault signal, or determining, based on another condition (for example, the photovoltaic module or the energy storage apparatus recovers to supply power to the load), that the diesel generator needs to stop, the system controller delivers the diesel generator stop instruction to the on/off-grid controller through RS485 communication. When receiving the diesel generator stop instruction, the control circuit disconnects the switch circuit, and sends, to the inverter, the first low-level signal indicating off-grid operation. The inverter switches to the voltage source mode based on the first low-level signal, and the photovoltaic power generation system switches from operating in the diesel generator parallel mode to the off-grid mode. Then, the control circuit sends the fourth low-level signal indicating to shut down the diesel generator to the diesel generator, and the diesel generator performs a shutdown operation based on the fourth low-level signal.

Refer to FIG. 6A to FIG. 6C. When the photovoltaic power generation system operates in the diesel generator parallel mode, that is, when the switch circuit is in the connected state and the ATS is in the state of connecting to the diesel generator, if the ATS detects that the power grid recovers, that is, after the ATS detects that the voltage of the power grid is greater than the threshold, the ATS enters a neutral state before switching the state to connecting to the power grid, that is, the ATS is connected to neither the diesel generator nor the power grid. In this case, the voltage on the grid side is abnormal. When the control circuit detects that the voltage on the grid side is less than or equal to the undervoltage protection voltage value, the control circuit disconnects the switch circuit, and sends, to the inverter, the first low-level signal indicating off-grid operation. The inverter switches to the voltage source mode based on the first low-level signal, and the photovoltaic power generation system switches from operating in the on-power grid mode to the off-grid mode. Then, the ATS switches to connecting to the power grid, so that the ATS switches to the state of connecting to the power grid. The ATS sends, to the system controller, the second low-level signal indicating connecting to the power grid. The system controller delivers, to the on/off-grid controller through RS485 communication, a signal indicating that the type of the alternating current power supply is the power grid. When the control circuit detects that the voltage on the grid side is greater than the undervoltage protection voltage value, the control circuit connects the switch circuit, and sends, to the inverter, the first high-level signal indicating on-grid operation. The inverter switches to the current source mode based on the first high-level signal, and the photovoltaic power generation system switches from operating in the off-grid mode to the on-power grid mode.

Refer to FIG. 6A to FIG. 6C. When the photovoltaic power generation system operates in the off-grid mode, that is, when the switch circuit is in the disconnected state, if the ATS detects that the voltage of the power grid recovers, the ATS switches to the state of connecting to the power grid, and sends, to the system controller, the second low-level signal indicating connecting to the power grid. The system controller delivers, to the on/off-grid controller through RS485 communication, a signal indicating that the type of the alternating current power supply is the power grid. When the control circuit detects that the voltage on the grid side is greater than the undervoltage protection voltage value, the control circuit connects the switch circuit, and sends, to the inverter, the first high-level signal indicating on-grid operation. The inverter switches to the current source mode based on the first high-level signal, and the photovoltaic power generation system switches from operating in the off-grid mode to the on-power grid mode.

In some embodiments of this application, when the photovoltaic power generation system switches from the off-grid mode to the on-power grid mode or the diesel generator parallel mode, and when the control circuit detects that the voltage on the grid side is greater than the undervoltage protection voltage value, to ensure stability of power supply in the process of switching to the on-grid mode, the voltage on the inverter side needs to be synchronized with the voltage on the grid side first, and the switch circuit is connected after a synchronization condition is met.

Specifically, when detecting that the voltage on the grid side is greater than the undervoltage protection voltage value, the control circuit sends a synchronization instruction to the inverter, and turns on the first relay. After receiving the synchronization instruction, the inverter switches to a virtual synchronous generator (virtual synchronous generator, VSG) control mode. The inverter adjusts an amplitude and a frequency of an output voltage based on voltage information on the grid side, and may further adjust a phase. After the control circuit detects that differences between voltage amplitudes, phases, and frequencies on the grid side and the inverter side all meet conditions, it indicates that the voltage on the inverter side is synchronized with the voltage on the grid side. In this case, the control circuit turns on the second relay, to complete an operation of connecting the switch circuit.

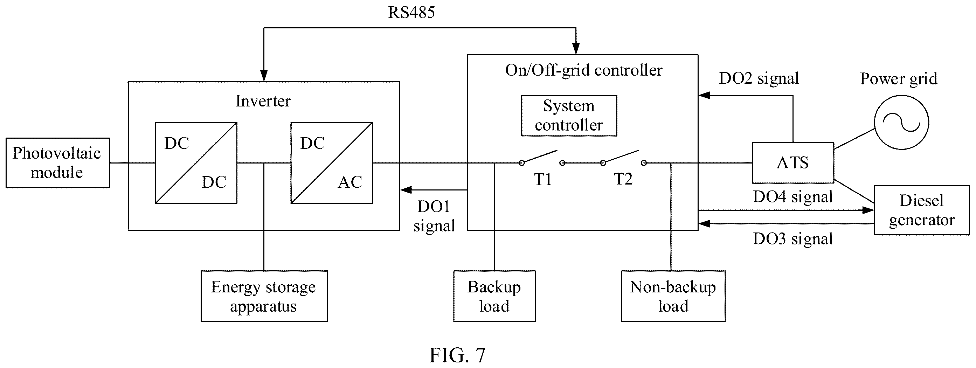

Refer to FIG. 7. In some other embodiments of this application, the system controller may be integrated into the on/off-grid controller, that is, a function of the system controller is integrated into the on/off-grid controller. In this case, the on/off-grid controller and the inverter are connected through one RS485 communication. In the backup power supply system, there are four signal cables, specifically including: a signal cable that is disposed between the on/off-grid controller and the inverter and that is configured to transmit an on/off-grid switching signal, a signal cable that is disposed between the ATS and the on/off-grid controller and that is configured to transmit an ATS state switching signal, a signal cable that is disposed between the diesel generator and the on/off-grid controller and that is configured to transmit a diesel generator fault signal, and a signal cable that is disposed between the on/off-grid controller and the diesel generator and that is configured to transmit a diesel generator start/stop control signal.

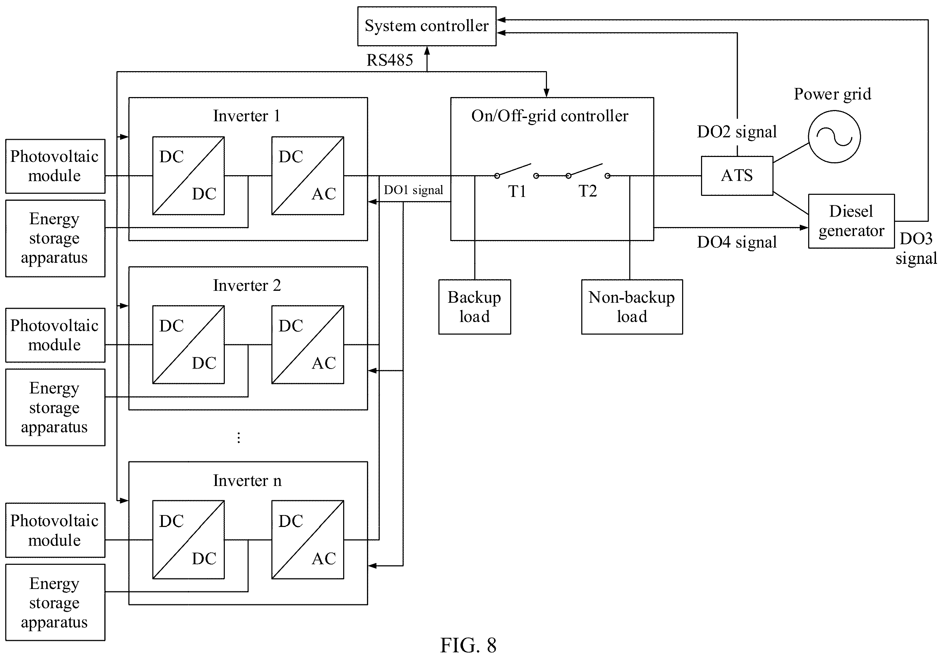

Refer to FIG. 8. In some other embodiments of this application, the photovoltaic power generation system may include a plurality of inverters. The on/off-grid controller and each inverter are connected to the system controller through one RS485 communication connection. The on/off-grid controller transmits an on/off-grid switching signal to each inverter through one signal cable. The control circuit may simultaneously control the plurality of inverters to operate in a current source mode, or simultaneously control the plurality of inverters to operate in a voltage source mode.

Based on a same inventive concept, an embodiment of this application further provides a control method for a photovoltaic power generation system, including the following steps:
when a switch circuit is in a connected state and an ATS connected to the switch circuit is in a state of connecting to a power grid, that is, when the photovoltaic power generation system operates in an on-power grid mode, if a voltage on a grid side of the switch circuit is less than or equal to an undervoltage protection voltage value, that is, the power grid is abnormal, disconnecting the switch circuit, and controlling an inverter to switch to a voltage source mode, so that the photovoltaic power generation system switches to operating in an off-grid mode, that is, a photovoltaic module or an energy storage apparatus is used to supply power to a load; and
when the photovoltaic module or the energy storage apparatus supplies power to the load, the photovoltaic power generation system operates in the off-grid mode, that is, when the switch circuit is in a disconnected state, if the photovoltaic module or the energy storage apparatus fails to supply sufficient power due to some factors, delivering a diesel generator start instruction, if the diesel generator start instruction is received, controlling a diesel generator to operate, and if the ATS is in the state of connecting to the diesel generator and the voltage on the grid side is greater than the undervoltage protection voltage value, connecting the switch circuit, and controlling the inverter to switch to a current source mode, so that the photovoltaic power generation system switches to operating in a diesel generator parallel mode.

In some embodiments of this application, when the photovoltaic power generation system operates in the diesel generator parallel mode, that is, when the switch circuit is in a connected state and the ATS is in the state of connecting to the diesel generator, if the diesel generator is faulty, or if the photovoltaic module or the energy storage apparatus recovers to supply power to the load, a diesel generator stop instruction is delivered. If the diesel generator stop instruction is received, the switch circuit is disconnected, the inverter is controlled to switch to the voltage source mode, the diesel generator is controlled to shut down, and the photovoltaic power generation system switches to operating in the off-grid mode, that is, the photovoltaic module or the energy storage apparatus is used to supply power to the load.

In some embodiments of this application, when the photovoltaic power generation system operates in the diesel generator parallel mode, that is, when the switch circuit is in the connected state and the ATS is in the state of connecting to the diesel generator, if the power grid recovers, that is, if the voltage on the grid side is less than or equal to the undervoltage protection voltage value after the ATS detects that the voltage of the power grid is greater than a threshold and before the ATS switches to connecting the grid side of the switch circuit to the power grid, the switch circuit is disconnected, and the inverter is controlled to switch to the voltage source mode. That is, the photovoltaic power generation system first switches to operating in the off-grid mode. Then, when the photovoltaic module or the energy storage apparatus supplies power to the load, the photovoltaic power generation system operates in the off-grid mode, that is, when the switch circuit is in the disconnected state and the ATS is in the state of connecting to the power grid, if the voltage on the grid side is greater than the undervoltage protection voltage value, it indicates that the power grid recovers. In this case, the switch circuit is connected, and the inverter is controlled to switch to the current source mode, that is, the photovoltaic power generation system switches to operating in the on-power grid mode.

In some embodiments of this application, when the photovoltaic power generation system switches from the off-grid mode to the on-power grid mode or the diesel generator parallel mode, that is, when it is detected that the voltage on the grid side is greater than the undervoltage protection voltage value, to ensure stability of power supply in the process of switching to the on-grid mode, a voltage on an inverter side needs to be synchronized with the voltage on the grid side first, and the switch circuit is connected after a synchronization condition is met. Specifically, when it is detected that the voltage on the grid side is greater than the undervoltage protection voltage value, a synchronization instruction is sent to the inverter, and a first relay connected to an alternating current side of the inverter is turned on. After receiving the synchronization instruction, the inverter switches to a VSG control mode. The inverter adjusts an amplitude and a frequency of an output voltage based on voltage information on the grid side, and may further adjust a phase. After a control circuit detects that differences between voltage amplitudes, phases, and frequencies on the grid side and the inverter side all meet conditions, it indicates that the voltage on the inverter side is synchronized with the voltage on the grid side. The control circuit turns on a second relay connected to the ATS, to complete an operation of connecting the switch circuit.

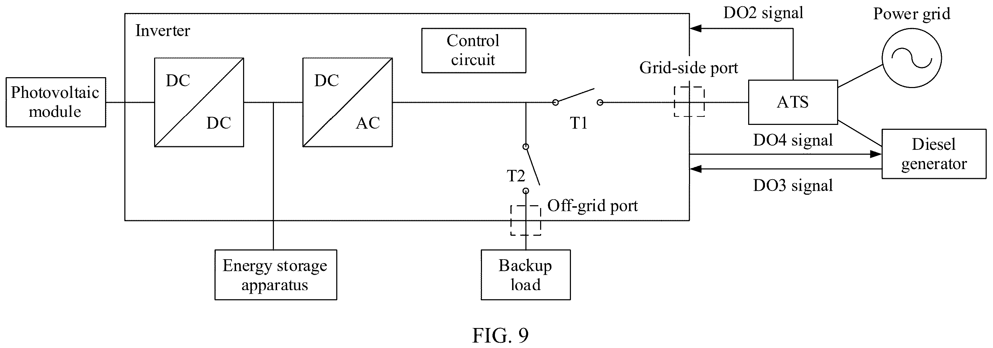

Based on a same invention concept, an embodiment of this application further provides another photovoltaic power generation system, and functions of an on/off-grid controller are integrated into an inverter to form an integrated structure. Refer to FIG. 9. The photovoltaic power generation system specifically includes an inverter and an ATS. The inverter includes an inverter circuit DC/AC, a first switch circuit, a grid-side port, and a control circuit, and may further include a direct current conversion circuit DC/DC. A direct current side of the inverter circuit DC/AC is configured to connect to a photovoltaic module or an energy storage apparatus through the direct current conversion circuit DC/DC. The first switch circuit is connected between an alternating current side of the inverter circuit DC/AC and the grid-side port. The direct current conversion circuit DC/DC is configured to perform power conversion on a direct current provided by the photovoltaic module. The inverter circuit DC/AC is configured to convert a direct current provided by the direct current conversion circuit DC/DC or a direct current provided by the energy storage apparatus into an alternating current. The ATS is configured to switch between connecting the grid-side port to a power grid and connecting the grid-side port to a diesel generator. The first switch circuit is connected between the inverter circuit DC/AC and an ATS. The power grid or the diesel generator is connected to the ATS to provide alternating current electric energy for the photovoltaic power generation system. The photovoltaic module or the energy storage apparatus is connected to the inverter to provide direct current electric energy for the photovoltaic power generation system. Specifically, when detecting that a voltage of the power grid is normal, the ATS switches to the state of connecting to the power grid. When the voltage of the power grid is abnormal, for example, the voltage of the power grid is less than a threshold, if the ATS detects that a voltage output by the diesel generator is normal, for example, the voltage is greater than the threshold, the ATS automatically switches to the state of connecting to the diesel generator. The ATS connected to the grid-side port can implement switching between two on-grid power supplies: the power grid and the diesel generator, without complex control logic.

Refer to FIG. 9. The first switch circuit may specifically include a first relay T1. The inverter may further include an off-grid port and a second switch circuit. The second switch circuit may specifically include a second relay T2. When the photovoltaic power generation system operates, the controller controls the second switch circuit to be in a connected state. The off-grid port is configured to connect to a backup load, and the grid-side port is configured to connect to the ATS. The first relay T1 is connected between the inverter circuit DC/AC and the grid-side port, and the second relay T2 is connected between the inverter circuit DC/AC and the off-grid port.

The control circuit may determine an operation mode of the photovoltaic power generation system based on a voltage of the off-grid port, a voltage of the grid-side port, and a type of an accessed alternating current power supply sent by the ATS (that is, the ATS is in a state of connecting to the power grid or the ATS is in the state of connecting to the diesel generator). Specifically, the operation mode of the photovoltaic power generation system is mainly classified into an on-power grid mode, a diesel generator parallel mode, and an off-grid mode. In addition, the control circuit may control the first switch circuit to be connected or disconnected, to implement switching between the on-grid mode (including the on-power grid mode and the diesel generator parallel mode) and the off-grid mode of the photovoltaic power generation system, to ensure continuity of power supply to the load.

In this application, when the voltage of the grid-side port is greater than an undervoltage protection voltage value and the ATS is in the state of connecting to the power grid, the control circuit controls the first switch circuit to be in a connected state, controls the inverter circuit to operate in a current source mode, and controls the diesel generator to shut down, so that the photovoltaic power generation system operates in the on-power grid mode to supply power to the load. When the voltage of the grid-side port is greater than the undervoltage protection voltage value and the ATS is in the state of connecting to the diesel generator, the control circuit controls the first switch circuit to be in the connected state, controls the inverter circuit to operate in the current source mode, and controls the diesel generator to operate, so that the photovoltaic power generation system operates in the diesel generator parallel mode to supply power to the load. When the voltage of the grid-side port is less than or equal to the undervoltage protection voltage value and the voltage of the off-grid port is greater than a minimum off-grid output voltage value, the control circuit controls the first switch circuit to be in a disconnected state, controls the inverter circuit to operate in a voltage source mode, and controls the diesel generator to shut down, so that the photovoltaic power generation system operates in the off-grid mode to supply power to the load.

In this application, the ATS may send an ATS state switching signal (a DO2 signal) to the inverter, so that the inverter determines that the ATS is in the state of connecting to the power grid or the diesel generator, to determine the operation mode in which the photovoltaic power generation system operates. Specifically, the ATS state switching signal may include a second high-level signal indicating connecting to the diesel generator and a second low-level signal indicating connecting to the power grid. When detecting that a voltage of the power grid is greater than the threshold, the ATS determines that the ATS is in the state of connecting to the power grid, and sends the second low-level signal to the inverter, so that the control circuit determines that the ATS is in a state of connecting to the power grid. When detecting that a voltage of the diesel generator is greater than a threshold, the ATS determines that the ATS is in the state of connecting to the diesel generator, and sends the second high-level signal to the inverter, so that the control circuit determines that the ATS is in a state of connecting to the diesel generator.

In this application, the diesel generator may send a diesel generator fault signal (a DO3 signal) to the inverter, so that the inverter formulates a diesel generator start/stop strategy by comprehensively considering system data such as an energy storage capacity and a remaining state of charge (SOC), power of the photovoltaic module, a state of an inverter overload, a state of the diesel generator, and a state of the power grid. Specifically, the diesel generator fault signal may include a third high-level signal indicating that the diesel generator is faulty and a third low-level signal indicating that the diesel generator is normal. When detecting that a fault occurs, the diesel generator sends the third high-level signal to the inverter. When the diesel generator is normal, the diesel generator sends the third low-level signal to the inverter.

In this application, the inverter may, send a diesel generator start/stop control signal (a DO4 signal) to the diesel generator, to control the diesel generator to operate or shut down. Specifically, the diesel generator start/stop control signal may include a fourth high-level signal indicating to start the diesel generator and a fourth low-level signal indicating to shut down the diesel generator. The inverter sends the fourth high-level signal or the fourth low-level signal to the diesel generator. When receiving the fourth high-level signal, the diesel generator performs a start operation. When receiving the fourth low-level signal, the diesel generator performs a shutdown operation.

In this application, the photovoltaic power generation system may quickly transmit the ATS state switching signal, the diesel generator fault signal, and the diesel generator start/stop control signal by disposing signal cables independent of a power cable. Transmitting the foregoing signals through the signal cables can improve signal transmission speed and reliability. Specifically, as shown in FIG. 9, a signal cable for transmitting the ATS switching state signal may be disposed between the ATS and the inverter. A signal cable for transmitting the diesel generator fault signal may be disposed between the diesel generator and the inverter. A signal cable for transmitting the diesel generator start/stop control signal may be disposed between the inverter and the diesel generator.

In this application, an operation mode switching condition of the photovoltaic power generation system is as follows: When the photovoltaic power generation system operates in the on-power grid mode, if the power grid is abnormal, that is, the voltage of the power grid is less than the undervoltage protection voltage value, the photovoltaic power generation system switches to operating in the off-grid mode, that is, the photovoltaic module or the energy storage apparatus is used to supply power to the load. When the photovoltaic module or the energy storage apparatus supplies power to the load, that is, when the photovoltaic power generation system operates in the off-grid mode, if the photovoltaic module or the energy storage apparatus fails to supply sufficient power due to some factors, the diesel generator start instruction is delivered, and the photovoltaic power generation system switches to operating in the diesel generator parallel mode, that is, the diesel generator is used to supply power to the load.

When the photovoltaic power generation system operates in the diesel generator parallel mode, if the diesel generator is faulty, or if the photovoltaic module or the energy storage apparatus recovers to supply power to the load, the diesel generator stop instruction is delivered, and the photovoltaic power generation system switches to operating in the off-grid mode, that is, the photovoltaic module or the energy storage apparatus is used to supply power to the load.

When the photovoltaic module or the energy storage apparatus supplies power to the load, that is, when the photovoltaic power generation system operates in the off-grid mode, if the power grid recovers, that is, the voltage of the power grid recovers to be greater than the undervoltage protection voltage value, the photovoltaic power generation system switches to operating in the on-power grid mode.

When the photovoltaic power generation system operates in the diesel generator parallel mode, if the power grid recovers, the photovoltaic power generation system first switches to operating in the off-grid mode, and then switches to operating in the on-power grid mode.

The foregoing switching logic can implement seamless switching between power supplies in the photovoltaic power generation system, to ensure continuous and stable power supply to the load.

The following describes in detail determining logic of operation modes and switching logic between operation modes in the photovoltaic power generation system.

After the inverter is powered on, the control circuit first determines whether the voltage of the grid-side port is greater than the undervoltage protection voltage value. If it is determined that the voltage of the grid-side port is greater than the undervoltage protection voltage value, the control circuit determines, based on the ATS state switching signal fed back by the ATS, whether the ATS is in the state of connecting to the power grid. If it is determined that the ATS is in the state of connecting to the power grid, the control circuit controls the first switch circuit to be in the connected state, and the control circuit controls the inverter circuit to operate in the current source mode, so that the photovoltaic power generation system operates in the on-power grid mode to supply power to the load. If it is determined that the ATS is in the state of connecting to the diesel generator, the control circuit controls the first switch circuit to be in the connected state, and the control circuit controls the inverter circuit to operate in the current source mode, so that the photovoltaic power generation system operates in the diesel generator parallel mode to supply power to the load. If it is determined that the voltage of the grid-side port is less than or equal to the undervoltage protection voltage value, the first switch circuit is controlled to be in the disconnected state, and the control circuit controls the inverter circuit to operate in the voltage source mode, so that the photovoltaic power generation system operates in the off-grid mode to supply power to the load.

When the photovoltaic power generation system operates in the on-power grid mode, that is, when the first switch circuit is in the connected state and the ATS is in the state of connecting to the power grid, if the control circuit detects that the voltage of the grid-side port is less than or equal to the undervoltage protection voltage value, it indicates that the power grid is faulty. In this case, the control circuit disconnects the first switch circuit, and controls the inverter circuit to switch to the voltage source mode, and the photovoltaic power generation system switches from operating in the on-power grid mode to the off-grid mode.

When the photovoltaic power generation system operates in the off-grid mode, that is, when the first switch circuit is in the disconnected state, if the control circuit receives the third low-level signal that is sent by the diesel generator and that indicates that the diesel generator is normal, and determines, based on another condition (for example, insufficient power generation of the photovoltaic module or the energy storage apparatus), that the diesel generator needs to be started, the control circuit sends, to the diesel generator, the fourth high-level signal indicating to start the diesel generator, and the diesel generator performs a start operation when receiving the fourth high-level signal. After the diesel generator operates, when detecting that the voltage of the diesel generator is normal, the ATS switches to the state of connecting to the diesel generator, and sends, to the inverter, the second high-level signal indicating connecting to the diesel generator. After the diesel generator operates, when the control circuit detects that the voltage of the grid-side port is greater than the undervoltage protection voltage value, the control circuit connects the first switch circuit, and controls the inverter circuit to switch to the current source mode, and the photovoltaic power generation system switches from operating in the off-grid mode to the diesel generator parallel mode.

When the photovoltaic power generation system operates in the diesel generator parallel mode, that is, when the first switch circuit is in the connected state and the ATS is in the state of connecting to the diesel generator, if the diesel generator is faulty and sends, to the inverter, the third high-level signal indicating that the diesel generator is faulty, after receiving the diesel generator fault signal or determining, based on another condition (for example, the photovoltaic module or the energy storage apparatus recovers to supply power to the load), that the diesel generator needs to be stopped, the inverter disconnects the first switch circuit, and controls the inverter circuit to switch to the voltage source mode, and the photovoltaic power generation system switches from operating in the diesel generator parallel mode to the off-grid mode. Then, the control circuit sends the fourth low-level signal indicating to shut down the diesel generator to the diesel generator, and the diesel generator performs a shutdown operation based on the fourth low-level signal.

When the photovoltaic power generation system operates in the diesel generator parallel mode, that is, when the first switch circuit is in the connected state and the ATS is in the state of connecting to the diesel generator, if the ATS detects that the power grid recovers, that is, after the ATS detects that the voltage of the power grid is greater than the threshold, the ATS enters a neutral state before switching the state to connecting to the power grid, that is, the ATS is connected to neither the diesel generator nor the power grid. In this case, the voltage of the grid-side port is abnormal. When the control circuit detects that the voltage of the grid-side port is less than or equal to the undervoltage protection voltage value, the control circuit disconnects the first switch circuit, and controls the inverter circuit to switch to the voltage source mode, and the photovoltaic power generation system switches from operating in the on-power grid mode to the off-grid mode. Then, the ATS switches to connecting to the power grid, so that the ATS switches to the state of connecting to the power grid, and the ATS sends, to the inverter, the second low-level signal indicating connecting to the power grid. When the control circuit detects that the voltage of the grid-side port is greater than the undervoltage protection voltage value, the control circuit connects the first switch circuit, and controls the inverter circuit to switch to the current source mode, and the photovoltaic power generation system switches from operating in the off-grid mode to the on-power grid mode.

When the photovoltaic power generation system operates in the off-grid mode, that is, when the first switch circuit is in the disconnected state, if the ATS detects that the voltage of the power grid recovers, the ATS switches to the state of connecting to the power grid, and sends, to the inverter, the second low-level signal indicating connecting to the power grid. When the control circuit detects that the voltage of the grid-side port is greater than the undervoltage protection voltage value, the control circuit connects the first switch circuit, and controls the inverter circuit to switch to the current source mode, and the photovoltaic power generation system switches from operating in the off-grid mode to the on-power grid mode.

In some embodiments of this application, when the photovoltaic power generation system switches from the off-grid mode to the on-power grid mode or the diesel generator parallel mode, when the control circuit detects that the voltage of the grid-side port is greater than the undervoltage protection voltage value, to ensure stability of power supply in the process of switching to the on-grid mode, the voltage of the off-grid port needs to be synchronized with the voltage of the grid-side port first, and the first switch circuit is connected after a synchronization condition is met.

Specifically, when the control circuit detects that the voltage of the grid-side port is greater than the undervoltage protection voltage value, before connecting the first switch circuit, the control circuit first controls the inverter circuit to switch to the VSG control mode. The inverter circuit adjusts an amplitude and a frequency of an output voltage based on voltage information of the grid-side port, and may further adjust a phase. After the control circuit detects that differences between voltage amplitudes, phases, and frequencies of the grid-side port and the off-grid port all meet conditions, it indicates that the voltage of the grid-side port is synchronized with the voltage of the off-grid port. In this case, the control circuit connects the first switch circuit, to complete an operation of connecting the first switch circuit.

The foregoing photovoltaic power generation system and the control method therefor provided in this application are used to control the switch circuit in the on/off-grid mode to be connected between the inverter and the ATS. The ATS is configured to switch between connecting the grid side of the switch circuit to the power grid and connecting the grid side of the switch circuit to the diesel generator. When the photovoltaic power generation system operates in the on-power grid mode, if the power grid is abnormal, the photovoltaic power generation system switches to the off-grid mode, that is, a photovoltaic module or an energy storage apparatus is used to supply power to a load. When the photovoltaic module or the energy storage apparatus supplies power to the load, that is, when the photovoltaic power generation system operates in the off-grid mode, if the photovoltaic module or the energy storage apparatus fails to supply sufficient power due to some factors, the photovoltaic power generation system switches to a diesel generator parallel mode. The foregoing switching process can implement continuous and stable power supply to the load during switching between different power supplies in the photovoltaic power generation system.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A photovoltaic power generation system, comprising an inverter, an on/off-grid controller, and an automatic transfer switch, ATS, wherein the on/off-grid controller comprises a switch circuit and a control circuit;
a direct current side of the inverter is configured to connect to a photovoltaic module or an energy storage apparatus, and an alternating current side of the inverter is connected to an inverter side of the switch circuit;
the ATS is configured to switch between connecting a grid side of the switch circuit to a power grid and connecting the grid side of the switch circuit to a diesel generator; and
the control circuit is configured to:
when the switch circuit is in a connected state and the ATS is in a state of connecting to the power grid, if a voltage on the grid side is less than or equal to an undervoltage protection voltage value, disconnect the switch circuit, and control the inverter to switch to a voltage source mode; or
when the switch circuit is in a disconnected state, if a diesel generator start instruction is received, control the diesel generator to operate, and if the ATS is in a state of connecting to the diesel generator and the voltage on the grid side is greater than the undervoltage protection voltage value, connect the switch circuit, and control the inverter to switch to a current source mode.

2. The photovoltaic power generation system according to claim 1, wherein the control circuit is further configured to:
when the switch circuit is in the connected state and the ATS is in the state of connecting to the diesel generator, if a diesel generator stop instruction is received, disconnect the switch circuit, control the inverter to switch to the voltage source mode, and control the diesel generator to shut down.

3. The photovoltaic power generation system according to claim 1 or 2, wherein the control circuit is further configured to:
when the switch circuit is in the connected state and the ATS is in the state of connecting to the diesel generator, if the voltage on the grid side is less than or equal to the undervoltage protection voltage value after the ATS detects that a voltage of the power grid is greater than the undervoltage protection voltage value and before the ATS switches to connecting the grid side of the switch circuit to the power grid, disconnect the switch circuit, and control the inverter to switch to the voltage source mode; or
when the switch circuit is in the disconnected state and the ATS is in the state of connecting to the power grid, if the voltage on the grid side is greater than the undervoltage protection voltage value, connect the switch circuit, and control the inverter to switch to the current source mode.

4. The photovoltaic power generation system according to any one of claims 1 to 3, wherein the on/off-grid controller comprises an inverter-side port and a grid-side port, the inverter-side port is connected to the alternating current side of the inverter, and the grid-side port is configured to connect to the ATS;
the switch circuit comprises a first relay and a second relay that are connected in series, the first relay is connected to the inverter-side port, and the second relay is connected to the grid-side port; and
that the controller is configured to connect the switch circuit specifically comprises: the controller is configured to: control the inverter to switch to a virtual synchronous generator VSG control mode, turn on the first relay, and turn on the second relay when a voltage on the inverter side is synchronized with the voltage on the grid side.

5. The photovoltaic power generation system according to any one of claims 1 to 4, further comprising a system controller, wherein the system controller is integrated inside the on/off-grid controller, or the system controller is disposed outside the on/off-grid controller; and
the system controller is configured to: deliver, to the control circuit, the state in which the ATS is connected to the power grid or connected to the diesel generator, and deliver the diesel generator start instruction or the diesel generator stop instruction to the control circuit.

6. A control method for a photovoltaic power generation system, comprising:
when a switch circuit is in a connected state and an ATS connected to the switch circuit is in a state of connecting to a power grid, if a voltage on a grid side of the switch circuit is less than or equal to an undervoltage protection voltage value, disconnecting the switch circuit, and controlling an inverter to switch to a voltage source mode; or
when the switch circuit is in a disconnected state, if a diesel generator start instruction is received, controlling a diesel generator to operate, and if the ATS is in a state of connecting to the diesel generator and the voltage on the grid side is greater than the undervoltage protection voltage value, connecting the switch circuit, and controlling the inverter to switch to a current source mode.

7. The control method according to claim 6, further comprising:
when the switch circuit is in the connected state and the ATS is in the state of connecting to the diesel generator, if a diesel generator stop instruction is received, disconnecting the switch circuit, controlling the inverter to switch to the voltage source mode, and controlling the diesel generator to shut down.

8. The control method according to claim 6 or 7, further comprising:
when the switch circuit is in the connected state and the ATS is in the state of connecting to the diesel generator, if the voltage on the grid side is less than or equal to the undervoltage protection voltage value after the ATS detects that a voltage of the power grid is greater than the undervoltage protection voltage value and before the ATS switches to connecting the grid side of the switch circuit to the power grid, disconnecting the switch circuit, and controlling the inverter to switch to the voltage source mode; or
when the switch circuit is in the disconnected state and the ATS is in the state of connecting to the power grid, if the voltage on the grid side is greater than the undervoltage protection voltage value, connecting the switch circuit, and controlling the inverter to switch to the current source mode.

9. The control method according to any one of claims 6 to 8, wherein connecting the switch circuit specifically comprises:
controlling the inverter to switch to a virtual synchronous generator VSG control mode, turning on a first relay connected to an alternating current side of the inverter, and when a voltage on an inverter side of the inverter is synchronized with the voltage on the grid side, turning on a second relay connected to the ATS.

10. A photovoltaic power generation system, comprising an inverter and an ATS, wherein the inverter comprises an inverter circuit, a first switch circuit, a grid-side port, and a control circuit;
a direct current side of the inverter circuit is configured to connect to a photovoltaic module or an energy storage apparatus, and the first switch circuit is connected between an alternating current side of the inverter circuit and the grid-side port;
the ATS is configured to switch between connecting the grid-side port to a power grid and connecting the grid-side port to a diesel generator; and
the control circuit is configured to:
when the first switch circuit is in a connected state and the ATS is in a state of connecting to the power grid, if a voltage of the grid-side port is less than or equal to an undervoltage protection voltage value, disconnect the first switch circuit, and control the inverter circuit to switch to a voltage source mode; or
when the first switch circuit is in a disconnected state, control the diesel generator to operate, and if the ATS is in a state of connecting to the diesel generator and the voltage of the grid-side port is greater than the undervoltage protection voltage value, connect the first switch circuit, and control the inverter circuit to switch to a current source mode.

11. The photovoltaic power generation system according to claim 10, wherein the control circuit is further configured to:
when the first switch circuit is in the connected state and the ATS is in the state of connecting to the diesel generator, disconnect the first switch circuit, control the inverter circuit to switch to the voltage source mode, and control the diesel generator to shut down.

12. The photovoltaic power generation system according to claim 10 or 11, wherein the control circuit is further configured to:
when the first switch circuit is in the connected state and the ATS is in the state of connecting to the diesel generator, if the voltage of the grid-side port is less than or equal to the undervoltage protection voltage value after the ATS detects that a voltage of the power grid is greater than a threshold and before the ATS switches to connecting the grid-side port to the power grid, disconnect the first switch circuit, and control the inverter circuit to switch to the voltage source mode; or
when the first switch circuit is in the disconnected state and the ATS is in the state of connecting to the power grid, if the voltage of the grid-side port is greater than the undervoltage protection voltage value, connect the first switch circuit, and control the inverter circuit to switch to the current source mode.

13. The photovoltaic power generation system according to any one of claims 10 to 12, wherein the photovoltaic power generation system further comprises an off-grid port and a second switch circuit, and the off-grid port is configured to connect to a backup power load;
the controller circuit is further configured to control the second switch circuit to be in a connected state; and
the controller circuit is further configured to: before connecting the first switch circuit, control the inverter circuit to switch to a virtual synchronous generator VSG control mode, and connect the first switch circuit when a voltage of the off-grid port is synchronized with the voltage of the grid-side port.
